# EUROPÄISCHE PATENTSCHRIFT

(11) **EP 3 439 929 B1**
(45) Veröffentlichungstag und Bekanntmachung des Hinweises auf die Patenterteilung: **19.02.2020**
(21) Anmeldenummer: 17716195.7
(22) Anmeldetag: 06.04.2017
(51) Int. Cl.: B60T 13/74

(54) **BETÄTIGUNGSVORRICHTUNG FÜR EINE FAHRZEUGBREMSE**
BRAKE ACTUATOR
ACTIONNEUR DE FREIN

(30) Priorität: 07.04.2016 DE 102016004297
(43) Veröffentlichungstag der Anmeldung: 13.02.2019
(73) Patentinhaber: Lucas Automotive GmbH, 56070 Koblenz (DE)
(72) Erfinder: POERTZGEN, Gregor, 56068 Koblenz (DE)
(74) Vertreter: Röthinger, Rainer
(86) Internationale Anmeldenummer: PCT/EP2017/058192
(87) Internationale Veröffentlichungsnummer: WO 2017/174700

(56) Entgegenhaltungen:
- WO-A1-2014/029488
- WO-A1-2015/165555
- DE-A1-102015 204 328

## Beschreibung

### Technisches Gebiet

Die vorliegende Offenbarung betrifft allgemein das technische Gebiet von Betätigungsvorrichtungen für eine elektromechanisch betätigbare Fahrzeugbremse. Die vorliegende Offenbarung betrifft insbesondere eine Betätigungsvorrichtung, die zum Betätigen einer elektrischen Park- bzw. Feststellbremse (EPB) oder einer elektromechanischen Betriebsbremse (EMB) eines Kraftfahrzeuges eingesetzt werden kann. Die vorliegende Offenbarung betrifft ferner eine Fahrzeugbremsanlage mit einer derartigen Betätigungsvorrichtung.

### Stand der Technik

Gattungsgemäße Betätigungsvorrichtungen weisen einen Elektromotor und ein von dem Elektromotor angetriebenes Getriebe auf. Das Getriebe kann mit einer Antriebseinrichtung gekoppelt sein, um Brems- bzw. Spannkräfte zum Betätigen der Bremse zu erzeugen.

Aus der WO 2015/165555 A1 ist eine derartige Betätigungsvorrichtung bekannt. Die Betätigungsvorrichtung umfasst eine mehrstufige Getriebeeinheit, die zwischen einem antreibenden Elektromotor und einem getriebenen Antriebselement der Fahrzeugbremse angeordnet ist. Eine Stufe der Getriebeeinheit ist als Stirnradgetriebe ausgebildet. Zwei Stufen der Getriebeeinheit sind mittels eines Doppelzahnrades gekoppelt, dessen Drehachse sich parallel zur Drehachse des Elektromotors erstreckt. Die Getriebeeinheit weist wenigstens eine Zwischenstufe auf, die in die eine als Stirnradgetriebe ausgebildete Stufe der Getriebeeinheit integriert ist.

Ferner sind auch aus der WO 2012/010256 A1 und der DE 10 2004 048 700 A1 derartige Betätigungsvorrichtungen bekannt. Auch diese Betätigungsvorrichtungen weisen eine mehrstufige Getriebeeinheit auf, die zwischen einem antreibenden Elektromotor und einem getriebenen Antriebselement der Fahrzeugbremse angeordnet ist.

WO 2014/029488 A1 offenbart eine Scheibenbremse mit einer ersten Betätigungseinrichtung, die von einem Pneumatikzylinder gebildet wird, und einem Bremssattel. Eine Achse, die senkrecht zur Bremsscheibenebene steht, stellt die Bremsenachse dar. Die erste Betätigungseinrichtung dient zur Betätigung der Betriebsbremse, wozu an einem Abstützbereich am Ende des Bremssattels ein Drehhebel mit einer exzentrisch wirkenden Bremswelle abgestützt ist. In einer zu der ersten Achse parallelen zweiten Achse ist die zweite Betätigungseinrichtung angeordnet. Diese weist einen als Antrieb dienenden Elektromotor, ein damit gekoppeltes Getriebe und ein Zahnrad auf. Die zweite Betätigungseinrichtung ist in einer am Sattelende ausgebildeten Öffnung aufgenommen. Zwischen der ersten Achse und der zweiten Achse liegt eine dazu parallele dritte Achse mit einem drehbar im Bremssattel gelagerten Zwischengetriebe. Die drei Achsen können in unterschiedlichen Ebenen zueinander liegen. Die den Achsen zugeordneten Komponenten erstrecken sich innerhalb des Bremssattels.

Aufgrund ihrer konstruktiven Ausgestaltung bauen die aus dem Stand der Technik bekannten Betätigungsvorrichtungen relativ groß.

### Kurzer Abriss

Die Erfindung betrifft eine Betätigungsvorrichtung nach Anspruch 1 für eine elektromechanisch betätigbare Fahrzeugbremse mit einem kompakten Aufbau und damit verringertem Bauraumbedarf anzugeben. Es ist insbesondere eine Betätigungsvorrichtung für eine elektromechanisch betätigbare Fahrzeugbremse anzugeben, die für den Einsatz im Bereich einer Vorderachse eines Fahrzeugs geeignet ist.

Die Betätigungsvorrichtung für eine elektromechanisch betätigbare Fahrzeugbremse umfasst einen eine Drehachse aufweisenden Elektromotor zum Antreiben der Betätigungsvorrichtung und ein mehrstufiges Getriebe, das mit dem Elektromotor drehmomentübertragend gekoppelt und mit einer Antriebseinrichtung der Fahrzeugbremse koppelbar ist. Das wenigstens eine mehrstufige Getriebe weist wenigstens eine Zwischengetriebeeinheit und wenigstens eine Ausgangsgetriebeeinheit auf. Die Ausgangsgetriebeeinheit weist wenigstens einen Ausgangswellenabschnitt auf, über den die Ausgangsgetriebeeinheit mit der Antriebseinrichtung der Fahrzeugbremse koppelbar ist. Eine Drehachse der Ausgangsgetriebeeinheit erstreckt sich durch den wenigstens einen Ausgangswellenabschnitt. Die Drehachse der Ausgangsgetriebeeinheit erstreckt sich parallel zur Drehachse der Zwischengetriebeeinheit und zur Drehachse des Elektromotors. Eine der Drehachsen des Elektromotors, der Zwischengetriebeeinheit und der Ausgangsgetriebeeinheit liegt außerhalb einer von jeweils zwei der Drehachsen des Elektromotors, der Zwischengetriebeeinheit und der Ausgangsgetriebeeinheit aufgespannten Ebene.

Die Drehachse des Elektromotors und die Drehachse der Zwischengetriebeeinheit können eine erste Ebene aufspannen. Die Drehachse der Zwischengetriebeeinheit und die Drehachse der Ausgangsgetriebeeinheit können eine zweite Ebene aufspannen. Die erste Ebene und die zweite Ebene können zwischen sich einen vorbestimmten Winkel einschließen, d.h. die erste Ebene und die zweite Ebene können um einen vorbestimmten Winkel abgewinkelt zueinander verlaufen. Der vorbestimmte Winkel kann ungleich 0° und ungleich 180° sein. Der vorbestimmte Winkel kann beispielsweise zwischen 60° und 170° betragen. Vorzugsweise kann der Winkel zwischen 90° und 150° liegen. Der vorbestimmte Winkel wird zwischen einem Abschnitt der ersten Ebene zwischen der Drehachse des Elektromotors und der Drehachse der Zwischengetriebeeinheit und einem Abschnitt der zweiten Ebene zwischen der Drehachse der Zwischengetriebeeinheit und der Drehachse der Ausgangsgetriebeeinheit festgelegt.

Die Schnittgerade der ersten Ebene und der zweiten Ebene kann eine der Drehachsen des Elektromotors, der Zwischengetriebeeinheit oder der Ausgangsgetriebeeinheit sein. Beispielsweise kann die Drehachse der Zwischengetriebeeinheit der Schnittgeraden der ersten Ebene und der zweiten Ebene entsprechen.

Die Zwischengetriebeeinheit kann unmittelbar mit der Ausgangsgetriebeeinheit drehmomentübertragend gekoppelt sein. Das wenigstens eine erste Zahnrad oder das wenigstens eine mit dem ersten Zahnrad koaxiale Zahnrad kann unmittelbar mit der Ausgangsgetriebeeinheit drehmomentübertragend gekoppelt sein. Die Zwischengetriebeeinheit und die Ausgangsgetriebeeinheit können in enger räumlicher Nachbarschaft angeordnet werden, so dass zur Kopplung der Zwischengetriebeeinheit und der Ausgangsgetriebeeinheit wenig Bauraum benötigt wird.

Die Zwischengetriebeeinheit kann wenigstens ein Zwischenzahnrad aufweisen. Das Zwischenzahnrad kann die Zwischengetriebeeinheit mit der Ausgangsgetriebeeinheit drehmomentübertragend koppeln. Die Drehachse des wenigstens einen Zwischenzahnrads kann sich parallel zu den Drehachsen des Elektromotors, der Zwischengetriebeeinheit und der Ausgangsgetriebeeinheit erstrecken.

Die Drehachse des wenigstens einen Zwischenzahnrads kann in der von der Drehachse der Zwischengetriebeeinheit und der Drehachse des Elektromotors aufgespannten ersten Ebene liegen. Die Drehachse des wenigstens einen Zwischenzahnrads kann in der von der Drehachse der Zwischengetriebeeinheit und der Ausgangsgetriebeeinheit aufgespannten zweiten Ebene liegen. Die Drehachse des wenigstens einen Zwischenzahnrads kann sich außerhalb der ersten Ebene und der zweiten Ebene erstrecken.

Die Zwischengetriebeeinheit kann zwei Zwischenzahnräder aufweisen. Die beiden Zwischenzahnräder können die Zwischengetriebeeinheit mit der Ausgangsgetriebeeinheit drehmomentübertragend koppeln. Die Drehachsen der beiden Zwischenzahnräder können sich parallel zu den Drehachsen des Elektromotors, der Zwischengetriebeeinheit und der Ausgangsgetriebeeinheit erstrecken.

Eine von den Drehachsen der Zwischenzahnräder aufgespannte Ebene kann sich mit einem vorbestimmten Winkel zur ersten Ebene erstrecken. Die von den Drehachsen der Zwischenzahnräder aufgespannte Ebene kann sich senkrecht zu der zweiten Ebene erstrecken.

Die Zwischengetriebeeinheit kann als Stirnradgetriebe ausgebildet sein. Das erste Zahnrad und das wenigstens eine koaxial zu dem ersten Zahnrad angeordnete zweite Zahnrad der Zwischengetriebeeinheit können in Form eines Doppelzahnrades ausgebildet sein. Dieses Doppelzahnrad kann die Drehachse der Zwischengetriebeeinheit festlegen.

Die Zwischengetriebeeinheit kann über das erste Zahnrad oder das zu dem ersten Zahnrad koaxiale zweite Zahnrad mit einem Ausgangszahnrad des Elektromotors koppelbar sein. Die Zwischengetriebeeinheit kann über das erste Zahnrad mit einem Ausgangszahnrad des Elektromotors und mit dem zu dem ersten Zahnrad koaxialen zweiten Zahnrad mit der Ausgangsgetriebeeinheit koppelbar sein. Das erste Zahnrad kann einen größeren Durchmesser als das zweite Zahnrad aufweisen. Das erste Zahnrad und das zweite Zahnrad können jeweils eine Getriebestufe der Zwischengetriebeeinheit bzw. des mehrstufigen Getriebes bilden.

Das erste Zahnrad kann unmittelbar mit dem Ausgangszahnrad des Elektromotors in drehmomentübertragenden Eingriff stehen. Das Ausgangszahnrad des Elektromotors berührt das erste Zahnrad der Zwischengetriebeeinheit an einem vorbestimmten Eingriffsbereich bzw. an einem vorbestimmten Eingriffspunkt. Die Drehachse des Elektromotors kann derart angeordnet sein, dass der vorbestimmte Eingriffsbereich in Umfangsrichtung des ersten Zahnrads der Zwischengetriebeeinheit zu der von der Drehachse der Zwischengetriebeeinheit und der Drehachse der Ausgangsgetriebeeinheit aufgespannten zweiten Ebene versetzt angeordnet ist. Der vorbestimmte Eingriffsbereich bzw. der vorbestimmte Eingriffspunkt liegt dabei vorzugsweise vollständig außerhalb dieser zweiten Ebene. Durch diesen Versatz können die Drehachsen des Elektromotors, der Zwischengetriebeeinheit und der Ausgangsgetriebeeinheit näher aneinander angeordnet sein, was dazu führt, dass der Elektromotor, die Zwischengetriebeeinheit und die Ausgangsgetriebeeinheit näher aneinander angeordnet werden können. Um einen verringerten Abstand zwischen der Drehachse des Elektromotors und der Drehachse der Ausgangsgetriebeeinheit zu erreichen, kann die Position der Drehachse des Elektromotors entlang des Außenumfangs des ersten Zahnrad der Zwischengetriebeeinheit derart festgelegt werden, dass der Eingriffsbereich bzw. der Eingriffspunkt außerhalb der zweiten Ebene liegt.

Das erste Zahnrad oder das zweite Zahnrad der Zwischengetriebeeinheit können unmittelbar oder mittelbar über das wenigstens eine Zwischenzahnrad mit der Ausgangsgetriebeeinheit gekoppelt sein. Insbesondere das zweite Zahnrad mit kleinerem Durchmesser kann mittelbar oder unmittelbar über das wenigstens eine Zwischenzahnrad mit der Ausgangsgetriebeeinheit gekoppelt sein. Bei einer unmittelbaren Kopplung kann das zweite Zahnrad der Zwischengetriebeeinheit direkt bzw. unmittelbar mit der Ausgangsgetriebeeinheit in drehmomentübertragenden Eingriff stehen, d.h. ohne zwischengeschaltetes Zwischenzahnrad.

Die Ausgangsgetriebeeinheit kann wenigstens ein Stirnrad und wenigstens ein Planetengetriebe aufweisen. Das zweite Zahnrad der Zwischengetriebeeinheit kann mittelbar über das wenigstens eine Zwischenzahnrad mit dem Stirnrad der Ausgangsgetriebeeinheit gekoppelt sein. Das zweite Zahnrad der Zwischengetriebeeinheit kann auch unmittelbar mit dem Stirnrad der Ausgangsgetriebeeinheit in drehmomentübertragenden Eingriff stehen.

Das wenigstens eine Stirnrad kann mit wenigstens einem Sonnenrad des Planetengetriebes gekoppelt sein. Das wenigstens eine Stirnrad kann mit dem Sonnenrad des Planetengetriebes drehfest verbunden sein. Das wenigstens eine Stirnrad kann insbesondere einstückig mit dem Sonnenrad des Planetengetriebes ausgebildet sein. Das wenigstens eine Stirnrad kann mit dem Sonnenrad über wenigstens einen sich in radialer Richtung erstreckenden Abschnitt verbunden sein. Der die Drehachse der Ausgangsgetriebeeinheit definierende Ausgangswellenabschnitt kann an einem Planetenträger des Planetengetriebes vorgesehen sein.

Die Betätigungsvorrichtung kann wenigstens ein Gehäuse aufweisen. Das Planetengetriebe kann ein Hohlrad aufweisen, dass einstückig mit dem wenigstens einen Gehäuse ausgebildet ist. Alternativ hierzu kann das Hohlrad zur Anordnung an wenigstens einem Teil des wenigstens einen Gehäuses ausgebildet sein.

Es wird ferner eine weitere Betätigungsvorrichtung für eine elektromechanisch betätigbare Fahrzeugbremse angegeben, die einen eine Drehachse aufweisenden Elektromotor zum Antreiben der Betätigungsvorrichtung und ein mehrstufiges Getriebe umfasst. Das mehrstufige Getriebe kann mit dem Elektromotor drehmomentübertragend gekoppelt und mit einer Antriebseinrichtung der Fahrzeugbremse koppelbar ist. Die Betätigungsvorrichtung weist ein Gehäuse auf. In dem Gehäuse sind der Elektromotor und das mehrstufige Getriebe aufgenommen. Das Gehäuse weist eine im Querschnitt abgewinkelte Form auf. Das wenigstens eine mehrstufige Getriebe kann wenigstens eine Zwischengetriebeeinheit und wenigstens eine Ausgangsgetriebeeinheit aufweisen. Die Zwischengetriebeeinheit weist wenigstens ein Zahnrad auf. Das wenigstens eine Zahnrad legt eine Drehachse der Zwischengetriebeeinheit fest. Die Ausgangsgetriebeeinheit weist wenigstens einen Ausgangswellenabschnitt auf, über den die Ausgangsgetriebeeinheit mit der Antriebseinrichtung der Fahrzeugbremse koppelbar ist. Eine Drehachse der Ausgangsgetriebeeinheit erstreckt sich durch den wenigstens einen Ausgangswellenabschnitt. Die Drehachse der Ausgangsgetriebeeinheit erstreckt sich parallel zur Drehachse der Zwischengetriebeeinheit und zur Drehachse des Elektromotors. Eine der Drehachsen des Elektromotors, der Zwischengetriebeeinheit und der Ausgangsgetriebeeinheit liegt außerhalb einer von jeweils zwei der Drehachsen des Elektromotors, der Zwischengetriebeeinheit und der Ausgangsgetriebeeinheit aufgespannten Ebene.

Die abgewinkelte Form des Gehäuses kann durch zwei sich schneidende Schenkel definiert sein. Die Drehachse der Zwischengetriebeeinheit kann im Bereich eines Schnittpunkts der Schenkel angeordnet sein. Die beiden Schenkel des Gehäuses können einen vorbestimmten Winkel zwischen sich einschließen. Der vorbestimmte Winkel kann beispielsweise zwischen 40° und 160° betragen. Vorzugsweise kann der Winkel zwischen 60° und 150° liegen. Insbesondere kann der Winkel zwischen 75° und 120° betragen.

Das Gehäuse kann einen ersten Aufnahmeabschnitt für den Motor und einen zweiten Aufnahmeabschnitt für das mehrstufige Getriebe aufweisen. Der erste Aufnahmeabschnitt und der zweite Aufnahmeabschnitt können abgewinkelt zueinander verlaufen. Der erste Aufnahmeabschnitt zur Aufnahme des Elektromotors und der zweite Aufnahmeabschnitt zur Aufnahme des Getriebes können sich abgewinkelt zueinander erstrecken.

Das wenigstens eine Gehäuse zur Aufnahme des Elektromotors, der Zwischengetriebeeinheit und der Ausgangsgetriebeeinheit kann im Querschnitt C- oder L-förmig ausgebildet sein.

Die Länge bzw. die Einbaulänge des Gehäuses der Betätigungsvorrichtung kann im Wesentlichen durch den Abstand zwischen der Drehachse des Elektromotors und der Drehachse der Ausgangsgetriebeeinheit bestimmt werden. Durch die Anordnung eine der Drehachsen des Elektromotors, der Zwischengetriebeeinheit und der Ausgangsgetriebeeinheit außerhalb der von jeweils zwei Drehachsen des Elektromotors, der Zwischengetriebeeinheit und der Ausgangsgetriebeeinheit aufgespannten Ebene kann der Abstand zwischen der Drehachse des Elektromotors und der Drehachse der Ausgangsgetriebeeinheit verringert werden. Da beispielsweise die Drehachse des Elektromotors versetzt zu einer von den Drehachsen der Zwischengetriebeeinheit und der Ausgangsgetriebeeinheit aufgespannten Ebene angeordnet sein kann, kann die Drehachse des Elektromotors näher an der Drehachse der Ausgangsgetriebeeinheit angeordnet werden. Dadurch kann die gekrümmte bzw. im Querschnitt im wesentlichen C- oder L-förmige Gestalt des Gehäuses und damit eine verkürzte Einbaulänge der Betätigungsvorrichtung erreicht werden.

Der Abstand zwischen der Drehachse des Elektromotors und der Drehachse der Ausgangsgetriebeeinheit kann von dem vorbestimmten Winkel zwischen der ersten Ebene und der zweiten Ebene abhängen. Es kann beispielsweise gelten, dass der Abstand zwischen der Drehachse des Elektromotors und der Drehachse der Ausgangsgetriebeeinheit umso kleiner wird, je kleiner der vorbestimmte Winkel zwischen der ersten Ebene und der zweiten Ebene ist. Die Einbaulänge der Betätigungsvorrichtung bzw. des Gehäuses der Betätigungsvorrichtung kann von dem vorbestimmten Winkel zwischen der erste Ebene und der zweiten Ebene bestimmt werden, da der die Einbaulänge bestimmende Abstand zwischen der Drehachse des Elektromotors und der Drehachse der Ausgangsgetriebeeinheit von dem vorbestimmten Winkel abhängt, der zwischen der ersten Ebene und der zweiten Ebene eingeschlossen wird.

An dem Gehäuse der Betätigungsvorrichtung kann wenigstens ein Befestigungsabschnitt zur Befestigung der Betätigungsvorrichtung an einem Fahrzeug vorgesehen sein. Der wenigstens eine Befestigungsabschnitt kann wenigstens eine Befestigungsöffnung aufweisen. Durch die versetzte Anordnung einer der Drehachsen des Elektromotors, der Zwischengetriebeeinheit und der Ausgangsgetriebeeinheit zu einer von jeweils zwei Drehachsen des Elektromotors, der Zwischengetriebeeinheit und der Ausgangsgetriebeeinheit aufgespannten Ebene können der der Aufnahmeabschnitt für den Elektromotor und der zweite Aufnahmeabschnitt für das Getriebe einen Befestigungsabschnitt mit einer Befestigungsöffnung zwischen sich einschließen. Dementsprechend können sowohl der Aufnahmeabschnitt für den Elektromotor als auch der Aufnahmeabschnitt für das Getriebe an dem wenigstens einen Befestigungsabschnitt mit der Befestigungsöffnung anliegen.

Die Betätigungsvorrichtung kann wenigstens eine Befestigungsöffnung aufweisen, die mit einem Bolzen zur Befestigung der Betätigungsvorrichtung an einem Fahrzeug zusammenwirken kann. Der Bolzen kann dabei fest an dem Fahrzeug an einer vorbestimmten Befestigungsstelle vorgesehen sein. Die Betätigungsvorrichtung kann mit ihrer Befestigungsöffnung auf diesen Bolzen aufgesteckt und am Fahrzeug befestigt werden.

Das Gehäuse kann ein erstes Gehäuseteil und ein zweites Gehäuseteil aufweisen. In einem der Gehäuseteile können die beiden Aufnahmeabschnitte ausgebildet sein. Das jeweils andere Gehäuseteil kann dann zum Verschluss des mit den Aufnahmeabschnitten ausgebildeten Gehäuseteils dienen.

Das Planetengetriebe kann ein Hohlrad aufweisen. Das Hohlrad des Planetengetriebes kann an dem wenigstens einen Gehäuse angeordnet sein. Mit anderen Worten kann das Hohlrad des Planetengetriebes Bestandteil des Gehäuses sein.

Das Hohlrad des Planetengetriebes kann einstückig mit dem wenigstens einen Gehäuse ausgebildet sein. Dadurch kann die Anzahl der Einzelteile reduziert und die Montage der Betätigungsvorrichtung vereinfacht werden.

Die Betätigungsvorrichtung kann ferner wenigstens ein Lagerelement aufweisen, an dem zumindest die Getriebeeinheit angebracht bzw. gelagert ist. Die Betätigungsvorrichtung kann ein erstes und ein zweites Lagerelement aufweisen, zwischen denen sich zumindest die Drehachsen der Zwischengetriebeeinheit und der Ausgangsgetriebeeinheit erstrecken.

Ferner wird eine Fahrzeugbremsanlage mit wenigstens einer Betätigungsvorrichtung der voranstehend beschriebenen Art angegeben.

Es wird zudem ein Fahrzeug mit einer derartigen Fahrzeugbremsanlage angegeben. Die wenigstens eine Betätigungsvorrichtung kann im Bereich der Vorderachse des Fahrzeugs angeordnet sein. Im Bereich der Vorderachse eines Fahrzeugs steht wegen der Vielzahl der in diesem Bereich angeordneten Aggregate und Komponenten eines Fahrzeugs, wie z.B. Motor und Lenkung eines Fahrzeugs, wenig Bauraum zur Verfügung. Aufgrund ihres bauraumsparenden Aufbaus ist die Betätigungsvorrichtung für die Anordnung im Bereich der Vorderachse geeignet.

### Kurze Beschreibung der Figuren

Weitere Vorteile, Einzelheiten und Merkmale der hier beschriebenen Lösung ergeben sich aus der nachfolgenden Beschreibung von Ausführungsbeispielen sowie aus den Figuren. Es zeigen:
- Fig. 1: eine perspektivische Ansicht einer Betätigungsvorrichtung gemäß eines ersten Ausführungsbeispiels;
- Fig. 2: eine weitere perspektivische Ansicht der Betätigungsvorrichtung gemäß des ersten Ausführungsbeispiels;
- Fig. 3: eine schematische Ansicht der Betätigungsvorrichtung gemäß des ersten Ausführungsbeispiels;
- Fig. 4: eine schematische Ansicht einer Betätigungsvorrichtung gemäß eines zweiten Ausführungsbeispiels;
- Fig. 5: eine schematische Ansicht einer Betätigungsvorrichtung gemäß eines dritten Ausführungsbeispiels;
- Fig. 6: eine schematische Ansicht einer Betätigungsvorrichtung gemäß eines vierten Ausführungsbeispiels; und
- Fign. 7 bis 9: Ansichten eines Gehäuses der Betätigungsvorrichtung.

### Detaillierte Beschreibung

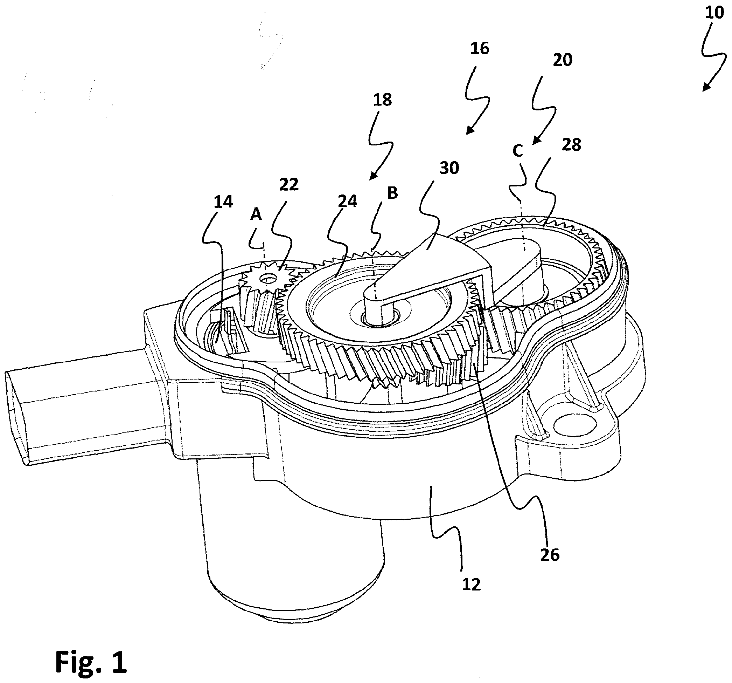

Fig. 1 zeigt eine perspektivische Ansicht einer Betätigungsvorrichtung für eine elektromechanisch betätigbare Fahrzeugbremse. Die Betätigungsvorrichtung ist allgemein mit 10 bezeichnet.

Die elektromechanische Betätigungsvorrichtung 10 weist ein Gehäuse 12 auf, in das der Elektromotor 14 und das Getriebe 16 eingesetzt sind. Das Getriebe 16 weist eine Zwischengetriebeeinheit 18 und eine Ausgangsgetriebeeinheit 20 auf. Das Getriebe 16 wird über ein Ausgangszahnrad 22 des Elektromotors 14 angetrieben. Durch das Ausgangszahnrad 22 erstreckt sich eine Drehachse A des Elektromotors 14.

Das Ausgangszahnrad 22 des Elektromotors 14 treibt ein Zahnrad 24 der Zwischengetriebeeinheit 18 an. Neben dem Zahnrad 24 weist die Zwischengetriebeeinheit 18 ein Zwischenzahnrad 26 auf, über das die Zwischengetriebeeinheit 18 mit der Ausgangsgetriebeeinheit 20 drehmomentübertragend gekoppelt ist. Über das Zwischenzahnrad 26 wird ein Zahnrad 28 der Ausgangsgetriebeeinheit 20 angetrieben. Das Zahnrad 24 der Zwischengetriebeeinheit 18 und das Zahnrad 28 der Ausgangsgetriebeeinheit 20 sind in Form von Stirnrädern ausgebildet.

Die Zwischengetriebeeinheit 18 weist eine Drehachse B und die Ausgangsgetriebeeinheit 20 weist eine Drehachse C auf. Die Drehachse A des Elektromotors 14 und die Drehachsen B und C der Zwischengetriebeeinheit 18 und der Ausgangsgetriebeeinheit 20 verlaufen parallel zueinander.

Die Zahnräder 24 und 28 werden von einem Lagerelement 30 gehalten bzw. sind an diesem Lagerelement 30 gelagert. Das Lagerelement 30 erstreckt sich stufenförmig von dem Zahnrad 24 der Zwischengetriebeeinheit 18 zu dem Zahnrad 28 der Ausgangsgetriebeeinheit 20. An dem Lagerelement 30 können in Fig. 1 nicht gezeigte Achsen der genannten Zahnräder angeordnet sein.

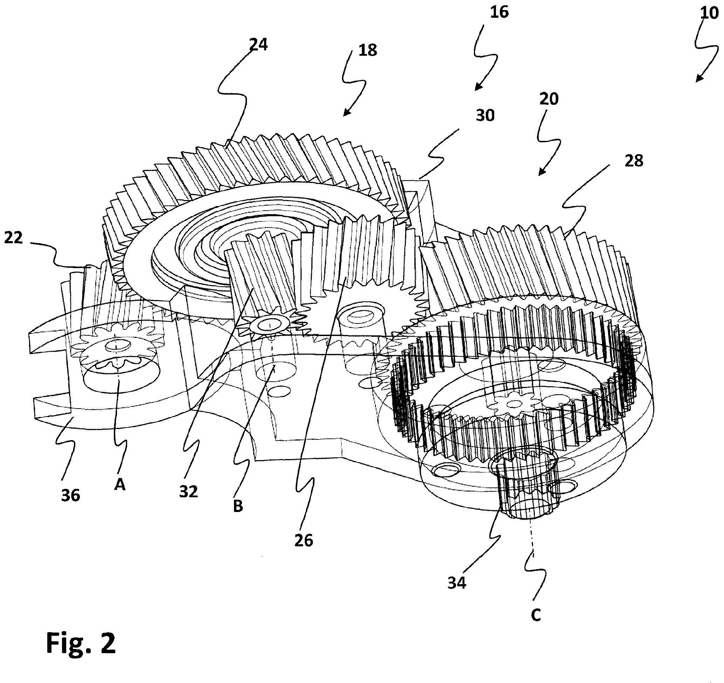

Fig. 2 zeigt eine weitere perspektivische Ansicht der Betätigungsvorrichtung 10. Wie sich aus Fig. 2 ergibt, weist die Zwischengetriebeeinheit 18 neben dem Zahnrad 24 ein weiteres Zahnrad 32 auf. Das Zahnrad 32 weist einen kleineren Durchmesser als das Zahnrad 24 auf. Das Zahnrad 32 ist koaxial mit dem Zahnrad 24 angeordnet. Die koaxialen Zahnräder 24, 32 sind drehfest miteinander gekoppelt und bilden dementsprechend ein Doppelzahnrad 24, 32, das sich um die Drehachse B dreht. Die Drehachse B ist die Drehachse der Zwischengetriebeeinheit 18, die von den koaxialen Zahnrädern 24, 32 festgelegt wird. Das Zahnrad 32 treibt das Zwischenzahnrad 26 an, das mit dem Zahnrad 28 der Ausgangsgetriebeeinheit 20 drehmomentübertragend gekoppelt ist. Die Ausgangsgetriebeeinheit 20 weist neben dem Zahnrad 28 einen Ausgangswellenabschnitt 34 auf, durch den sich die Drehachse C der Ausgangsgetriebeeinheit 20 erstreckt.

Zwischen dem Zahnrad 28 der Ausgangsgetriebeeinheit 20 und dem Ausgangswellenabschnitt 34 ist ein in Fig. 2 nicht gezeigtes Planetengetriebe angeordnet, das das Zahnrad 28 mit dem Ausgangswellenabschnitt 34 drehmomentübertragend koppelt. Über das Planetengetriebe wird der Ausgangswellenabschnitt 34 angetrieben. Der Ausgangswellenabschnitt 34 wiederum treibt eine ebenfalls nicht gezeigte Mutter- /Spindel-Einheit an, die die von dem Getriebe 16 erzeugte Rotationsbewegung in eine translatorische Bewegung zum Betätigen der Bremse umwandelt.

Neben dem Lagerelement 30 weist die Betätigungsvorrichtung 10 ein weiteres Lagerelement 36 auf. Die Lagerelemente 30, 36 dienen zur Halterung bzw. Lagerung der Zwischengetriebeeinheit 18 und der Ausgangsgetriebeeinheit 20 sowie des Elektromotors 14. Das Lagerelement 36 weist eine geknickte bzw. abgewinkelte Form auf, um den Elektromotor 14, die Zwischengetriebeeinheit 18 und die Ausgangsgetriebeeinheit haltern bzw. lagern zu können.

In Fig. 2 ist erkennbar, dass die Zahnräder 24, 32 ein Stirnradgetriebe bilden. Das Doppelzahnrad 24, 32 stellt zwei Stufen der Zwischengetriebeeinheit 18 bzw. des mehrstufigen Getriebes 16 dar. Die erste Stufe wird von dem Zahnrad 24 mit größerem Durchmesser und die zweite Stufe von dem Zahnrad 32 mit kleinerem Durchmesser gebildet.

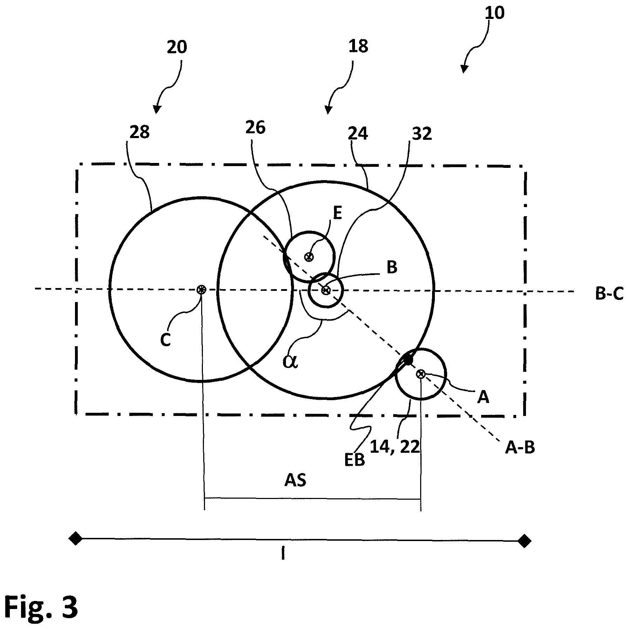

Fig. 3 zeigt eine schematische Ansicht der Betätigungsvorrichtung 10 gemäß des ersten Ausführungsbeispiels. In Fig. 3 ist das Ausgangszahnrad 22 des Elektromotors 14 dargestellt, durch das sich die Drehachse A des Elektromotors 14 erstreckt. Das Ausgangszahnrad 22 des Elektromotors 14 treibt das Zahnrad 24 der Zwischengetriebeeinheit 18 an. Von dem Zahnrad 24 wird das Drehmoment auf das durchmesserkleinere Zahnrad 32 übertragen. Die Zahnräder 24 und 32 der Zwischengetriebeeinheit 18 sind koaxial angeordnet und legen die Drehachse B der Zwischengetriebeeinheit 18 fest, d.h. die Zahnräder 24, 32 drehen sich um die Drehachse B der Zwischengetriebeeinheit 18.

Das Zahnrad 32 treibt das Zwischenzahnrad 26 an. Das Zwischenzahnrad 26 weist eine Drehachse E auf. Das Zwischenzahnrad 26 treibt die Ausgangsgetriebeeinheit 20 an. Dazu steht das Zwischenzahnrad 26 mit dem Zahnrad 28 der Ausgangsgetriebeeinheit 20 im drehmomentübertragendem Eingriff. Die Ausgangsgetriebeeinheit 20 weist die Drehachse C auf.

Die Drehachse A des Elektromotors 14 und die Drehachse B der Zwischengetriebeeinheit 18 spannen eine erste Ebene A-B auf. Die Drehachse B der Zwischengetriebeeinheit 18 und die Drehachse C der Ausgangsgetriebeeinheit 20 spannen eine zweite Ebene B-C auf.

Die erste Ebene A-B verläuft abgewinkelt zu der zweiten Ebene B-C. Die erste Ebene A-B und die zweite Ebene B-C schließen zwischen sich einen vorbestimmten Winkel a ein. Der Winkel α ist ungleich 0° und ungleich 180°. Der Winkel a kann beispielsweise zwischen 60° und 170° betragen. Der Winkel α kann beispielsweise 135° betragen. Der Winkel α wird zwischen dem Abschnitt der ersten Ebene A-B zwischen der Drehachse A des Elektromotors 14 und der Drehachse B der Zwischengetriebeeinheit 18 und dem Abschnitt der zweiten Ebene B-C zwischen der Drehachse B und der Drehachse C der Ausgangsgetriebeeinheit 20 festgelegt.

Das Ausgangszahnrad 22 des Elektromotors 14 steht mit dem Zahnrad 24 in drehmomentübertragenden Eingriff. Dabei berührt das Ausgangszahnrad 22 des Elektromotors 14 das Zahnrad 24 der Zwischengetriebeeinheit 18 an einem vorbestimmten Eingriffsbereich EB bzw. Eingriffspunkt EB. Die Drehachse A des Elektromotors 14 ist derart angeordnet, dass der vorbestimmte Eingriffsbereich EB bzw. der vorbestimmte Eingriffspunkt EB vollständig außerhalb der zweiten Ebene B-C liegt, die von den Drehachsen B und C der Zwischengetriebeeinheit 18 und der Ausgangsgetriebeeinheit 20 aufgespannt wird. Da die Drehachse A des Elektromotors 14 zur zweiten Ebene B-C in Umfangsrichtung des ersten Zahnrades 24 versetzt ist, ist der Eingriffsbereich EB bzw. der vorbestimmte Eingriffspunkt EB in Umfangsrichtung des ersten Zahnrades 24 entlang des Außenumfangs des Zahnrades 24 zu der zweiten Ebene B-C versetzt. Durch den Versatz der Drehachse A des Elektromotors 14 zur zweiten Ebene B-C kann die Drehachse A des Elektromotors 14 und damit auch der Elektromotor 14 näher an den Drehachsen B und C der Zwischengetriebeeinheit 18 und der Ausgangsgetriebeeinheit 20 angeordnet werden.

Die Einbaulänge I der Betätigungsvorrichtung 10 wird im Wesentlichen durch den Abstand AS zwischen der Drehachse A des Elektromotors 14 und der Drehachse C der Ausgangsgetriebeeinheit 20 bestimmt. Der Abstand AS wird parallel zur zweiten Ebene B-C ermittelt. Durch den abgewinkelten Verlauf der ersten Ebene A-B zur zweiten Ebene B-C wird der Abstand AS zwischen der Drehachse A des Elektromotors 14 und der Drehachse C der Zwischengetriebeeinheit 18 verringert, wodurch ein kompakter Aufbau der Betätigungsvorrichtung 10 erreicht wird. Durch diesen kompakten Aufbau ist die Betätigungsvorrichtung 10 insbesondere für den Einsatz an der Vorderachse eines Fahrzeugs geeignet. Der Abstand AS wird von dem Winkel α bestimmt, den die erste Ebene A-B und die zweite Ebene B-C zwischen sich einschließen. Damit hängt auch die Einbaulänge I der Betätigungsvorrichtung 10 von dem Winkel α ab. Je kleiner der Winkel α ist, umso geringer ist der Abstand AS zwischen der Drehachse A des Elektromotors 14 und der Drehachse C der Ausgangsgetriebeeinheit 20 und damit die Einbaulänge I der Betätigungsvorrichtung 10.

Bei dem Ausführungsbeispiel gemäß Fig. 3 ist das Zwischenzahnrad 26 oberhalb der zweiten Ebene B-C vorgesehen, d.h. die Drehachse E des Zwischenzahnrads 26 befindet sich auf der der Drehachse A des Elektromotors 14 abgewandten Seite der zweiten Ebene B-C.

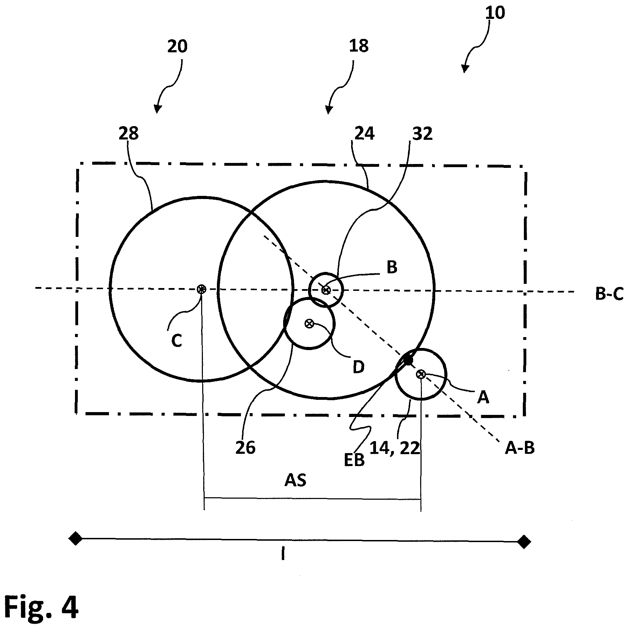

Fig. 4 zeigt eine schematische Ansicht einer Betätigungsvorrichtung gemäß eines zweiten Ausführungsbeispiels. Der Aufbau der Betätigungsvorrichtung 10 gemäß des in Fig. 4 gezeigten Ausführungsbeispiels entspricht weitgehend dem voranstehend beschriebenen Aufbau der Betätigungsvorrichtung des Ausführungsbeispiels gemäß Fig. 3. Der Winkel α ist in Fig. 4 aus Gründen der Übersichtlichkeit nicht eingetragen. Die erste Ebene A-B und die zweite Ebene B-C verlaufen jedoch auch bei dem Ausführungsbeispiel gemäß Fig. 4 mit einem vorbestimmten Winkel zueinander.

Der einzige wesentliche Unterschied besteht darin, dass das Zwischenzahnrad 26 in vertikaler Richtung unterhalb der zweiten Ebene B-C angeordnet ist. Mit anderen Worten befindet sich das Zwischenzahnrad 26 mit seiner Drehachse E bei diesem Ausführungsbeispiel auf der Seite der zweiten Ebene B-C, auf der sich auch die Drehachse A des Elektromotors 14 befindet.

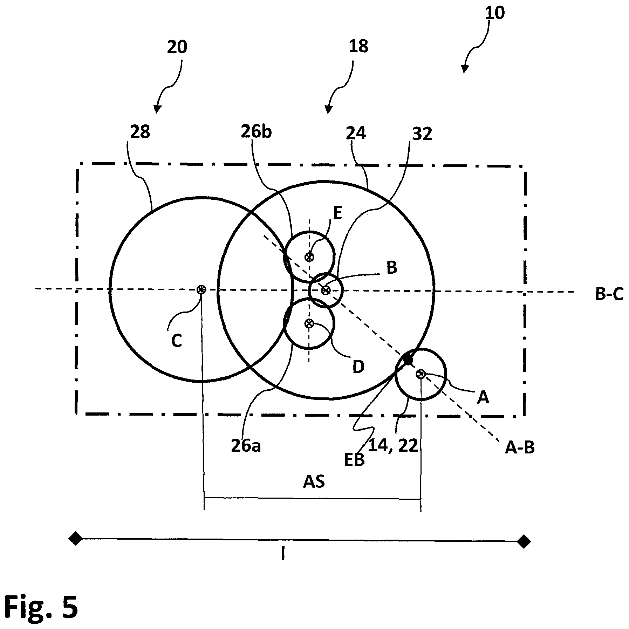

Fig. 5 zeigt eine schematische Ansicht eines dritten Ausführungsbeispiels der Betätigungsvorrichtung 10. Die Anordnung der Drehachsen A, B und C des Elektromotors 14, der Zwischengetriebeeinheit 18 und der Ausgangsgetriebeeinheit 20 entspricht dem voranstehend mit Bezug auf die Fign. 3 und 4 beschriebenen Anordnung. Aus Gründen der Übersichtlichkeit ist der Winkel α auch in Fig. 5 nicht eingezeichnet. Die erste Ebene A-B und die zweite Ebene B-C verlaufen auch bei dem Ausführungsbeispiel gemäß Fig. 5 mit einem vorbestimmten Winkel zueinander.

Die Betätigungsvorrichtung 10 gemäß des in Fig. 5 gezeigten Ausführungsbeispiels weist zwei Zwischenzahnräder 26a und 26b auf. Die Zwischenzahnräder 26a, 26b weisen jeweils eine Drehachse D, E auf. Die Drehachsen D, E der Zwischenzahnräder 26a und 26b spannen eine Ebene D-E auf. Die Ebene D-E der Drehachsen D, E der Zwischenzahnräder 26a, 26b verläuft senkrecht zur zweiten Ebene B-C und abgewinkelt zur ersten Ebene A-B.

Auch bei einer Anordnung von zwei Zwischenrädern 26a, 26b weist die Betätigungsvorrichtung 10 einen kompakten Aufbau auf.

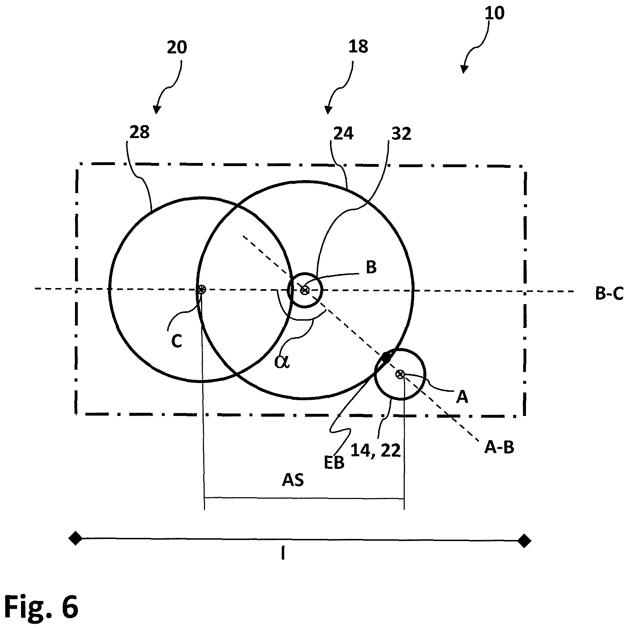

Fig. 6 zeigt eine schematische Ansicht einer Betätigungsvorrichtung 10 gemäß eines vierten Ausführungsbeispiels der Erfindung auf. Bei dem Ausführungsbeispiel gemäß Fig. 6 ist kein Zwischenzahnrad vorgesehen. Die Zwischengetriebeeinheit 18 liegt direkt über das Zahnrad 32 mit kleinerem Durchmesser an der Ausgangsgetriebeeinheit 20 bzw. deren Zahnrad 28 an. Das Zahnrad 32 der Zwischengetriebeeinheit 18 steht in direkten und unmittelbaren drehmomentübertragenden Eingriff mit dem Zahnrad 28 der Ausgangsgetriebeeinheit 20.

Die Anordnung der Drehachsen A des Elektromotors 14, B der Zwischengetriebeeinheit 18 und C der Ausgangsgetriebeeinheit 20 entspricht der voranstehend beschriebenen Anordnung. Die erste Ebene A-B verläuft abgewinkelt zu der zweiten Ebene B-C. Die Ebenen A-B und B-C schließen zwischen sich einen vorbestimmten Winkel α ein. Der Winkel α ist ungleich 0° und ungleich 180°. Da das Ausführungsbeispiel gemäß Fig. 6 keine Zwischenräder aufweist, kann ein sehr kompakter Aufbau erreicht werden.

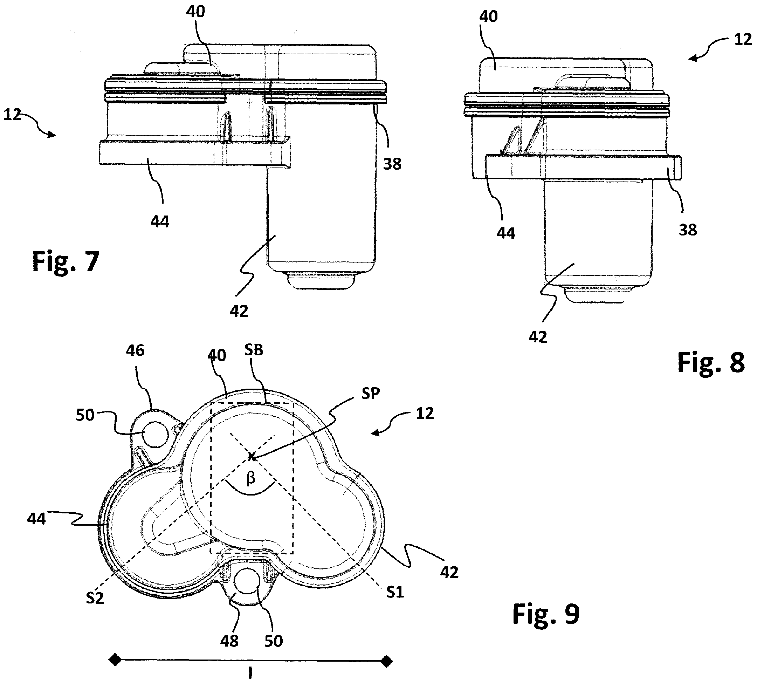

Die Fign. 7 bis 9 zeigen Ansichten des Gehäuses 12 der Betätigungsvorrichtung 10 gemäß einem der hier beschriebenen Ausführungsbeispiele. Das Gehäuse 12 dient zur Aufnahme des Getriebes und des Elektromotors, die beide in den Fign. 7 bis 9 nicht gezeigt sind. Das Gehäuse 12 weist zwei Gehäuseteile 38 und 40 auf. In dem Gehäuseteil 38 sind ein erster Aufnahmeabschnitt 42 zur Aufnahme des Elektromotors und ein zweiter Aufnahmeabschnitt 44 ausgebildet, der zur Aufnahme des Getriebes dient. Das Gehäuseteil 40 bildet ein Verschlusselement zum Abschließen des Gehäuses 12.

Der Aufnahmeabschnitt 42 zur Aufnahme des Elektromotors und der Aufnahmeabschnitt 44 zur Aufnahme des Getriebes erstrecken sich abgewinkelt zueinander. Der Aufnahmeabschnitt 42 ist im Schenkel S1 und der Aufnahmeabschnitt 44 ist im Schenkel S2 des Gehäuses 12 ausgebildet. Zur Veranschaulichung sind in Fig. 9 die Schenkel S1 und S1 durch Strichlinien angezeigt. Die Schenkel S1 und S2 schneiden sich in einem Bereich SB bzw. in einem Schnittpunkt SP innerhalb dieses Bereichs SB. Die Schenkel S1 und S2 schließen einen vorbestimmten Winkel β zwischen sich ein. Im Schnittbereich SB kann die in Fig. 9 nicht eingezeichnete Drehachse der Zwischengetriebeeinheit angeordnet sein. Durch die abgewinkelte Anordnung der Aufnahmeabschnitte 42 und 44 bzw. durch die sich schneidenden Schenkel S1 und S2 wird eine gekrümmte oder abgewinkelte Form des Gehäuses 12 erreicht, die im Querschnitt als C- oder L-förmig bezeichnet werden kann. Die C- bzw. L-förmige Gestalt des Gehäuses 12 ist insbesondere in Fig. 9 erkennbar. Aufgrund dieser Form weist das Gehäuse 12 einen kompakten Aufbau auf, der wenig Bauraum einnimmt. Die Betätigungsvorrichtung 10 weist somit eine geringe Einbaulänge I auf.

An dem Gehäuse 12 sind ferner Befestigungsabschnitte 46, 48 vorgesehen, die jeweils eine Befestigungsöffnung 50 aufweisen. Die Befestigungsabschnitte 46, 48 dienen zum Anbringen der Betätigungsvorrichtung 10 an einem Fahrzeug. Der Aufnahmeabschnitt 42 und der Aufnahmeabschnitt 44 schließen zwischen sich den Befestigungsabschnitt 48 ein. Aufgrund der abgewinkelten Anordnung der Aufnahmeabschnitte 42 und 44 liegen die beiden Aufnahmeabschnitte 42 und 44 an dem Befestigungsabschnitt 48 an. Die in den Aufnahmeabschnitten 42 und 44 aufgenommenen Komponenten der Betätigungsvorrichtung 10 sind nahe an den Befestigungsabschnitten 46 und 48 angeordnet, so die Betätigungsvorrichtung 10 mit ihren Befestigungsabschnitten 46 und 48 wenig Bauraum einnimmt.

Durch die anhand der Ausführungsbeispiele veranschaulichte versetzte Anordnung der Drehachsen des Elektromotors, der Zwischengetriebeeinheit und der Ausgangsgetriebeeinheit kann ein kompakter Aufbau der Betätigungsvorrichtung erreicht werden, der wenig Bauraum einnimmt. Im Bereich der Vorderachse eines Fahrzeugs steht gerade im Vergleich zur Hinterachse eines Fahrzeugs relativ wenig Bauraum zur Verfügung. Im Bereich der Vorderachse bzw. an der Vorderachse sind in einem Fahrzeug eine Vielzahl von Komponenten angeordnet. Derartige Komponenten können beispielsweise der Motor, mit dem Motor in Verbindung stehende Elemente und Aggregate oder die Lenkung betreffende Vorrichtungen wie zum Beispiel die Lenksäule und ähnliches sein. Mit ihrem kompakten und wenig Bauraum einnehmenden Aufbau ist die Betätigungsvorrichtung insbesondere für den Einsatz im Bereich der Vorderachse geeignet.

Es wurden verschiedene Ausführungsbeispiele mit sich teilweise unterscheidenden Merkmalen beschrieben. Die Merkmale der einzelnen Ausführungsbeispiele können beliebig kombiniert werden, um zu einem nicht dargestellten Ausführungsbeispiel zu gelangen.

## Patentansprüche

1. Betätigungsvorrichtung (10) für eine elektromechanisch betätigbare Fahrzeugbremse, umfassend
einen Elektromotor (14) zum Antreiben der Betätigungsvorrichtung (10), wobei der Elektromotor (14) eine Drehachse (A) aufweist,
ein mehrstufiges Getriebe (16), das mit dem Elektromotor (14) drehmomentübertragend gekoppelt und mit einer Antriebseinrichtung der Fahrzeugbremse koppelbar ist, wobei
das wenigstens eine mehrstufige Getriebe (16) wenigstens eine Zwischengetriebeeinheit (18) und wenigstens eine Ausgangsgetriebeeinheit (20) aufweist, wobei
die Zwischengetriebeeinheit (18) wenigstens ein Zahnrad (24) aufweist, wobei das wenigstens eine Zahnrad (24) eine Drehachse (B) der Zwischengetriebeeinheit (18) festlegt, wobei
die Ausgangsgetriebeeinheit (20) wenigstens einen Ausgangswellenabschnitt (34) aufweist, über den die Ausgangsgetriebeeinheit (20) mit der Antriebseinrichtung der Fahrzeugbremse koppelbar ist, wobei
sich eine Drehachse (C) der Ausgangsgetriebeeinheit (20) durch den wenigstens einen Ausgangswellenabschnitt (34) erstreckt, wobei
sich die Drehachse (C) der Ausgangsgetriebeeinheit (20) parallel zur Drehachse (B) der Zwischengetriebeeinheit (18) und zur Drehachse (A) des Elektromotors (14) erstreckt und eine der Drehachsen (A, B, C) des Elektromotors (14), der Zwischengetriebeeinheit (18) und der Ausgangsgetriebeeinheit (20) außerhalb einer von jeweils zwei der Drehachsen (A, B, C) des Elektromotors (14), der Zwischengetriebeeinheit (18) und der Ausgangsgetriebeeinheit (20) aufgespannten Ebene (A-B, B-C) liegt, **gekennzeichnet durch** wenigstens ein Gehäuse (12) in dem der Elektromotor (14) und das mehrstufige Getriebe (16) aufgenommen sind, wobei das Gehäuse (12) eine im Querschnitt abgewinkelte Form aufweist.

2. Betätigungsvorrichtung (10) nach Anspruch 1,
wobei die Drehachse (A) des Elektromotors (14) und die Drehachse (B) der Zwischengetriebeeinheit (18) eine erste Ebene (A-B) aufspannen, wobei die Drehachse (B) der Zwischengetriebeeinheit (18) und die Drehachse (C) der Ausgangsgetriebeeinheit (20) eine zweite Ebene (B-C) aufspannen, wobei die erste Ebene (A-B) und die zweite Ebene (B-C) zwischen sich einen vorbestimmten Winkel (α) einschließen; wobei, optional, der vorbestimmte Winkel (α) ungleich 0° und ungleich 180° ist.

3. Betätigungsvorrichtung (10) nach einem der Ansprüche 1 bis 2,
wobei das wenigstens eine erste Zahnrad (24) oder das wenigstens eine mit dem ersten Zahnrad (24) koaxiale zweite Zahnrad (32) unmittelbar mit der Ausgangsgetriebeeinheit (20) drehmomentübertragend gekoppelt ist.

4. Betätigungsvorrichtung (10) nach einem der Ansprüche 1 bis 2,
wobei die Zwischengetriebeeinheit (18) wenigstens ein Zwischenzahnrad (26) aufweist, das die Zwischengetriebeeinheit (18) mit der Ausgangsgetriebeeinheit (20) drehmomentübertragend koppelt, wobei das wenigstens eine Zwischenzahnrad (26) eine Drehachse (D, E) aufweist.

5. Betätigungsvorrichtung (10) nach Anspruch 4,
wobei die Drehachse (D, E) des wenigstens einen Zwischenzahnrads (26) in der oder einer von den Drehachsen (A, B) des Elektromotors (14) und der Zwischengetriebeeinheit (18) aufgespannten ersten Ebene (A-B) liegt; oder
wobei die Drehachse (D, E) des wenigstens einen Zwischenzahnrads (26) in der oder einer von den Drehachsen (B, C) der Zwischengetriebeeinheit (18) und der Ausgangsgetriebeeinheit (20) aufgespannten zweiten Ebene (B-C) liegt; oder
wobei sich die Drehachse (D, E) des wenigstens einen Zwischenzahnrads (26) außerhalb der oder einer von den Drehachsen (A, B) des Elektromotors (14) und der Zwischengetriebeeinheit (18) aufgespannten ersten Ebene (A-B) und der oder einer von den Drehachsen (B, C) der Zwischengetriebeeinheit (18) und der Ausgangsgetriebeeinheit (20) aufgespannten zweiten Ebene (B-C) erstreckt.

6. Betätigungsvorrichtung (10) nach Anspruch 4 oder 5,
wobei die Zwischengetriebeeinheit (18) zwei Zwischenzahnräder (26a, 26b) aufweist, die die Zwischengetriebeeinheit (18) mit der Ausgangsgetriebeeinheit (20) drehmomentübertragend koppeln;
wobei sich optional eine von den Drehachsen (D, E) der Zwischenzahnräder (26a, 26b) aufgespannte Ebene (D-E) mit einem vorbestimmten Winkel zu der oder einer ersten Ebene (A-B) und senkrecht zu der oder einer zweiten Ebene (B-C) erstreckt.

7. Betätigungsvorrichtung (10) nach einem der Ansprüche 1 bis 5,
wobei die Zwischengetriebeeinheit (18) als Stirnradgetriebe ausgebildet ist und das erste Zahnrad (24) und das zweite Zahnrad (32) der Zwischengetriebeeinheit (18) ein Doppelzahnrad (24, 32) bilden, das die Drehachse (B) der Zwischengetriebeeinheit (18) festlegt.

8. Betätigungsvorrichtung (10) nach Anspruch 7,
wobei die Zwischengetriebeeinheit (18) über das Doppelzahnrad (24, 32) mit einem Ausgangszahnrad (22) des Elektromotors (14) und der Ausgangsgetriebeeinheit (20) koppelbar ist;
wobei, optional, das Doppelzahnrad (24, 32) unmittelbar oder mittelbar über das wenigstens eine oder wenigstens ein Zwischenrad (26) mit der Ausgangsgetriebeeinheit (20) koppelbar ist.

9. Betätigungsvorrichtung (10) nach einem der Ansprüche 1 bis 8,
wobei die Ausgangsgetriebeeinheit (20) wenigstens ein Stirnrad (28) und wenigstens ein Planetengetriebe aufweist;
wobei, optional, das wenigstens eine Stirnrad (28) mit einem Sonnenrad des Planetengetriebes gekoppelt ist.

10. Betätigungsvorrichtung (10) nach Anspruch 9,
wobei der die Drehachse (C) der Ausgangsgetriebeeinheit (20) definierende Ausgangswellenabschnitt (34) an einem Planetenträger des Planetengetriebes vorgesehen ist.

11. Betätigungsvorrichtung (10) nach Anspruch 9 oder 10,
wobei das Planetengetriebe ein Hohlrad aufweist und das Hohlrad des Planetengetriebes zur Anordnung an wenigstens einem Teil eines Gehäuses (12) der Betätigungsvorrichtung (10) ausgebildet ist; oder
wobei das Hohlrad des Planetengetriebes einstückig mit dem wenigstens einen Gehäuse (12) ausgebildet ist.

12. Betätigungsvorrichtung nach einem der Ansprüche 1 bis 11,
wobei die Zwischengetriebeeinheit (18) wenigstens ein erstes Zahnrad (24) und ein mit dem ersten Zahnrad (32) koaxiales zweites Zahnrad aufweist, wobei das erste Zahnrad (24) und das zweite Zahnrad (32) die Drehachse (B) der Zwischengetriebeeinheit (18) festlegen.

13. Betätigungsvorrichtung nach einem der Ansprüche 1 bis 12,
wobei die oder eine abgewinkelte Form des Gehäuses (12) durch zwei sich schneidende Schenkel (S1, S2) definiert ist und die Drehachse (B) der Zwischengetriebeeinheit (18) im Bereich (SB) eines Schnittpunkts (SP) der Schenkel (S1, S2) des Gehäuses (12) angeordnet ist; oder
wobei das wenigstens eine Gehäuse (12) zur Aufnahme des Elektromotors (14), der Zwischengetriebeeinheit (18) und der Ausgangsgetriebeeinheit (20) im Querschnitt im Wesentlichen C- oder L-förmig ausgebildet ist.

14. Betätigungsvorrichtung (10) nach einem der Ansprüche 1 bis 13,
wobei das wenigstens eine Gehäuse (12) einen ersten Aufnahmeabschnitt (42) für den Elektromotor (14) und einen zweiten Aufnahmeabschnitt (44) für das mehrstufige Getriebe (16) aufweist, wobei der erste Aufnahmeabschnitt (42) abgewinkelt zu dem zweiten Aufnahmeabschnitt (44) verläuft; oder
wobei die Betätigungsvorrichtung (10) wenigstens einen Befestigungsabschnitt (46, 48) zum Befestigen der Betätigungsvorrichtung (10) an einem Fahrzeug aufweist.

15. Fahrzeugbremsanlage mit wenigstens einer Betätigungsvorrichtung (10) nach einem der Ansprüche 1 bis 14;
wobei, optional, wenigstens eine Betätigungsvorrichtung (10) nach einem der Ansprüche 1 bis 14 im Bereich einer Vorderachse des die Fahrzeugbremsanlage umfassenden Fahrzeugs angeordnet ist.

## Claims

1. An actuation device (10) for an electromechanically actuatable vehicle brake, comprising
an electric motor (14) for driving the actuation device (10), wherein the electric motor (14) has a rotational axis (A),
a multistage transmission (16), which is coupled to the electric motor (14) so as to transmit a torque and can be coupled to a drive device of the vehicle brake, wherein
the at least one multistage transmission (16) has at least one intermediate transmission unit (18) and at least one output transmission unit (20), wherein
the intermediate transmission unit (18) has at least one gear (24), wherein the at least one gear (24) defines a rotational axis (B) of the intermediate transmission unit (18), wherein
the output transmission unit (20) has at least one output shaft section (34), via which the output transmission unit (20) can be coupled to the drive device of the vehicle brake, wherein
a rotational axis (C) of the output transmission unit (20) extends through the at least one output shaft section (34), wherein
the rotational axis (C) of the output transmission unit (20) extends in parallel to the rotational axis (B) of the intermediate transmission unit (18) and to the rotational axis (A) of the electric motor (14) and one of the rotational axes (A, B, C) of the electric motor (14), the intermediate transmission unit (18) and the output transmission unit (20) lies outside a plane (A-B, B-C) spanned by respectively two of the rotational axes (A, B, C) of the electric motor (14), the intermediate transmission (18) unit and the output transmission unit (20),
**characterized by** at least one housing (12), in which the electric motor (14) and the multistage transmission (16) are received, wherein the housing (12) has a shape that is angled in cross section.

2. The actuation device (10) according to claim 1,
wherein the rotational axis (A) of the electric motor (14) and the rotational axis (B) of the intermediate transmission unit (18) span a first plane (A-B), wherein the rotational axis (B) of the intermediate transmission unit (18) and the rotational axis (C) of the output transmission unit (20) span a second plane (B-C), wherein the first plane (A-B) and the second plane (B-C) enclose a predetermined angle (α) between them; wherein, optionally, the predetermined angle (α) is unequal to 0° and unequal to 180°.

3. The actuation device (10) according to any one of claims 1 to 2,
wherein the at least one first gear (24) or the at least one second gear (32) coaxial with the first gear (24) is coupled directly to the output transmission unit (20) so as to transmit a torque.

4. The actuation device (10) according to any one of claims 1 to 2,
wherein the intermediate transmission unit (18) has at least one intermediate gear (26), which couples the intermediate transmission unit (18) to the output transmission unit (20) so as to transmit a torque, wherein the at least one intermediate gear (26) has a rotational axis (D, E).

5. The actuation device (10) according to claim 4,
wherein the rotational axis (D, E) of the at least one intermediate gear (26) lies in the or a first plane (A-B) spanned by the rotational axes (A, B) of the electric motor (14) and the intermediate transmission unit (18); or
wherein the rotational axis (D, E) of the at least one intermediate gear (26) lies in the or a second plane (B-C) spanned by the rotational axes (B, C) of the intermediate transmission unit (18) and the output transmission unit (20); or
wherein the rotational axis (D, E) of the at least one intermediate gear (26) extends outside the or a first plane (A-B) spanned by the rotational axes (A, B) of the electric motor (14) and the intermediate transmission unit (18) and the or a second plane (B-C) spanned by the rotational axes (B, C) of the intermediate transmission unit (18) and the output transmission unit (20).

6. The actuation device (10) according to claim 4 or 5,
wherein the intermediate transmission unit (18) has two intermediate gears (26a, 26b), which couple the intermediate transmission unit (18) to the output transmission unit (20) so as to transmit a torque;
wherein a plane (D-E) spanned by the rotational axes (D, E) of the intermediate gears (26a, 26b) extends at a predetermined angle to the or a first plane (A-B) and perpendicular to the or a second plane (B-C).

7. The actuation device (10) according to any one of claims 1 to 5,
wherein the intermediate transmission unit (18) is formed as a cylindrical-gear transmission and the first gear (24) and the second gear (32) of the intermediate transmission unit (18) form a double gear (24, 32), which determines the rotational axis (B) of the intermediate transmission unit (18).

8. The actuation device (10) according to claim 7,
wherein the intermediate transmission unit (18) can be coupled via the double gear (24, 32) to an output gear (22) of the electric motor (14) and to the output transmission unit (20);
wherein, optionally, the double gear (24, 32) can be coupled directly or indirectly via the at least one or at least one intermediate gear (26) to the output transmission unit (20).

9. The actuation device (10) according to any one of claims 1 to 8,
wherein the output transmission unit (20) has at least one cylindrical gear (28) and at least one planetary transmission;
wherein, optionally, the at least one cylindrical gear (28) is coupled to a sun wheel of the planetary transmission.

10. The actuation device (10) according to claim 9,
wherein the output shaft section (34) defining the rotational axis (C) of the output transmission unit (20) is provided on a planetary carrier of the planetary transmission.

11. The actuation device (10) according to claim 9 or 10
wherein the planetary transmission has a ring gear and the ring gear of the planetary transmission is formed to be arranged on at least a part of a housing (12) of the actuation device (10); or
wherein the ring gear of the planetary transmission is formed in one piece with the at least one housing (12).

12. The actuation device (10) according to any one of claims 1 to 11,
wherein the intermediate transmission unit (18) has at least a first gear (24) and a second gear (32) coaxial with the first gear (24), wherein the first gear (24) and the second gear (32) determine the rotational axis (B) of the intermediate transmission unit (18).

13. The actuation device (10) according to any one of claims 1 to 12,
wherein the or an angled shape of the housing (12) is defined by two intersecting limbs (S1, S2) and the rotational axis (B) of the intermediate transmission unit (18) is arranged in the region (SB) of an intersection point (SP) of the limbs (S1, S2) of the housing (12); or
wherein the at least one housing (12) for receiving the electric motor (14), the intermediate transmission unit (18) and the output transmission unit (20) is formed substantially C- or L-shaped in cross section.

14. The actuation device (10) according to any one of claims 1 to 13,
wherein the at least one housing (12) has a first receiving section (42) for the electric motor (14) and a second receiving section (44) for the multistage transmission (16), wherein the first receiving section (42) runs at an angle to the second receiving section (44); or
wherein the actuation device (10) has at least one attachment section (46, 48) for attaching the actuation device (10) to a vehicle.

15. Vehicle braking system with at least one actuation device (10) according to any one of claims 1 to 14;
wherein, optionally, at least one actuation device (10) according to any one of claims 1 to 14 is arranged in the area of a front axle of the vehicle comprising the vehicle braking system.

## Revendications

1. Dispositif d'actionnement (10) pour un frein de véhicule à actionnement électromécanique, comprenant
un moteur électrique (14) pour l'entraînement du dispositif d'actionnement (10), le moteur électrique (14) comprenant un axe de rotation (A),
une transmission à plusieurs étages (16) qui est accouplée en transmission de couple au moteur électrique (14) et qui peut être accouplée à un moyen d'entraînement du frein de véhicule,
dans lequel ladite au moins une transmission à plusieurs étages (16) comprend au moins une unité de transmission intermédiaire (18) et au moins une unité de transmission de sortie (20),
dans lequel l'unité de transmission intermédiaire (18) comprend au moins une roue dentée (24), ladite au moins une roue dentée (24) définissant un axe de rotation (B) de l'unité de transmission intermédiaire (18),
dans lequel l'unité de transmission de sortie (20) comprend au moins une partie d'arbre de sortie (34) par laquelle l'unité de transmission de sortie (20) peut être accouplée au moyen d'entraînement du frein de véhicule,
dans lequel un axe de rotation (C) de l'unité de transmission de sortie (20) s'étend à travers ladite au moins une partie d'arbre de sortie (34),
dans lequel l'axe de rotation (C) de l'unité de transmission de sortie (20) s'étend parallèlement à l'axe de rotation (B) de l'unité de transmission intermédiaire (18) et à l'axe de rotation (A) du moteur électrique (14), et l'un des axes de rotation (A, B, C) du moteur électrique (14), de l'unité de transmission intermédiaire (18) et de l'unité de transmission de sortie (20) est situé en dehors d'un plan (A-B, B-C) respectivement défini par deux des axes de rotation (A, B, C) du moteur électrique (14), de l'unité de transmission intermédiaire (18) et de l'unité de transmission de sortie (20),
**caractérisé par** au moins un carter (12) dans lequel le moteur électrique (14) et la transmission à plusieurs étages (16) sont logés, le carter (12) présentant une forme angulaire en section transversale.

2. Dispositif d'actionnement (10) selon la revendication 1,
dans lequel l'axe de rotation (A) du moteur électrique (14) et l'axe de rotation (B) de l'unité de transmission intermédiaire (18) définissent un premier plan (A-B), l'axe de rotation (B) de l'unité de transmission intermédiaire (18) et l'axe de rotation (C) de l'unité de transmission de sortie (20) définissent un deuxième plan (B-C), le premier plan (A-B) et le deuxième plan (B-C) formant un angle prédéterminé (a) entre eux ; dans lequel, en option, l'angle prédéterminé (a) est différent de 0° et différent de 180°.

3. Dispositif d'actionnement (10) selon l'une des revendications 1 à 2,
dans lequel ladite au moins une première roue dentée (24) ou ladite au moins une deuxième roue dentée (32) coaxiale à la première roue dentée (24) est directement accouplée en transmission de couple à l'unité de transmission de sortie (20).

4. Dispositif d'actionnement (10) selon l'une des revendications 1 à 2,
dans lequel l'unité de transmission intermédiaire (18) comprend au moins une roue dentée intermédiaire (26) qui accouple en transmission de couple l'unité de transmission intermédiaire (18) à l'unité de transmission de sortie (20), ladite au moins une roue dentée intermédiaire (26) comprenant un axe de rotation (D, E).

5. Dispositif d'actionnement (10) selon la revendication 4,
dans lequel l'axe de rotation (D, E) de ladite au moins une roue dentée intermédiaire (26) est situé dans le ou un premier plan (A-B) défini par les axes de rotation (A, B) du moteur électrique (14) et de l'unité de transmission intermédiaire (18) ; ou
dans lequel l'axe de rotation (D, E) de ladite au moins une roue dentée intermédiaire (26) est situé dans le ou un deuxième plan (B-C) défini par les axes de rotation (B, C) de l'unité de transmission intermédiaire (18) et de l'unité de transmission de sortie (20) ; ou
dans lequel l'axe de rotation (D, E) de ladite au moins une roue dentée intermédiaire (26) s'étend en dehors du ou d'un premier plan (A-B) défini par les axes de rotation (A, B) du moteur électrique (14) et de l'unité de transmission intermédiaire (18) et du ou d'un deuxième plan (B-C) défini par les axes de rotation (B, C) de l'unité de transmission intermédiaire (18) et de l'unité de transmission de sortie (20).

6. Dispositif d'actionnement (10) selon la revendication 4 ou 5,
dans lequel l'unité de transmission intermédiaire (18) comprend deux roues dentées intermédiaires (26a, 26b) qui accouplent en transmission de couple l'unité de transmission intermédiaire (18) à l'unité de transmission de sortie (20) ;
dans lequel, en option, un plan (D-E) défini par les axes de rotation (D, E) des roues dentées intermédiaires (26a, 26b) s'étend selon un angle prédéterminé par rapport au ou à un premier plan (A-B) et perpendiculairement au ou à un deuxième plan (B-C).

7. Dispositif d'actionnement (10) selon l'une des revendications 1 à 5,
dans lequel l'unité de transmission intermédiaire (18) est réalisée sous la forme d'une transmission à roues droites et la première roue dentée (24) et la deuxième roue dentée (32) de l'unité de transmission intermédiaire (18) forment une roue dentée double (24, 32) qui définit l'axe de rotation (B) de l'unité de transmission intermédiaire (18).

8. Dispositif d'actionnement (10) selon la revendication 7,
dans lequel l'unité de transmission intermédiaire (18) peut être accouplée par l'intermédiaire de la roue dentée double (24, 32) à une roue dentée de sortie (22) du moteur électrique (14) et à l'unité de transmission de sortie (20) ;
dans lequel, en option, la roue dentée double (24, 32) peut être accouplée directement ou indirectement par l'intermédiaire de ladite au moins une roue dentée intermédiaire (26) à l'unité de transmission de sortie (20).

9. Dispositif d'actionnement (10) selon l'une des revendications 1 à 8,
dans lequel l'unité de transmission de sortie (20) comprend au moins une roue droite (28) et au moins un engrenage planétaire ;
dans lequel, en option, ladite au moins une roue droite (28) est accouplée à une roue solaire de l'engrenage planétaire.

10. Dispositif d'actionnement (10) selon la revendication 9,
dans lequel la partie d'arbre de sortie (34) définissant l'axe de rotation (C) de l'unité de transmission de sortie (20) est prévue sur un porte-satellites de l'engrenage planétaire.

11. Dispositif d'actionnement (10) selon la revendication 9 ou 10,
dans lequel l'engrenage planétaire comprend une couronne à denture intérieure et la couronne à denture intérieure de l'engrenage planétaire est conçue pour être disposée sur au moins une partie d'un carter (12) du dispositif d'actionnement (10) ; ou
dans lequel la couronne à denture intérieure de l'engrenage planétaire est réalisée d'une seule pièce avec ledit au moins un carter (12).

12. Dispositif d'actionnement selon l'une des revendications 1 à 11,
dans lequel l'unité de transmission intermédiaire (18) comprend au moins une première roue dentée (24) et une deuxième roue dentée coaxiale à la première roue dentée (32), la première roue dentée (24) et la deuxième roue dentée (32) définissant l'axe de rotation (B) de l'unité de transmission intermédiaire (18).

13. Dispositif d'actionnement selon l'une des revendications 1 à 12,
dans lequel la ou une forme angulaire du carter (12) est définie par deux branches (S1, S2) qui se croisent et l'axe de rotation (B) de l'unité de transmission intermédiaire (18) est disposé dans la zone (SB) d'un point d'intersection (SP) des branches (S1, S2) du carter (12) ; ou
dans lequel ledit au moins un carter (12) destiné à recevoir le moteur électrique (14), l'unité de transmission intermédiaire (18) et l'unité de transmission de sortie (20) est réalisé sensiblement en forme de C ou de L en section transversale.

14. Dispositif d'actionnement (10) selon l'une des revendications 1 à 13,
dans lequel ledit au moins un carter (12) comprend une première partie de réception (42) pour le moteur électrique (14) et une deuxième partie de réception (44) pour la transmission à plusieurs étages (16), la première partie de réception (42) s'étendant selon un angle par rapport à la deuxième partie de réception (44) ; ou
dans lequel le dispositif d'actionnement (10) comprend au moins une partie de fixation (46, 48) pour la fixation du dispositif d'actionnement (10) sur un véhicule.

15. Système de freinage de véhicule comportant au moins un dispositif d'actionnement (10) selon l'une des revendications 1 à 14 ;
dans lequel, en option, au moins un dispositif d'actionnement (10) selon l'une des revendications 1 à 14 est disposé dans la zone d'un essieu avant du véhicule comprenant le système de freinage de véhicule.
